# EUROPÄISCHE PATENTANMELDUNG

(11) **EP 1 273 533 A1**
(43) Veröffentlichungstag der Anmeldung: **08.01.2003**
(21) Anmeldenummer: 02011938.4
(22) Anmeldetag: 29.05.2002
(51) Int. Cl.: B65G 17/20

(54) **Hängefördervorrichtung, insbesondere auf Hacken hängendem Gut**

(30) Priorität: 25.06.2001 DE 20110455 U
(71) Anmelder: Gärtner, Franz, 97656 Oberelsbach (DE)
(72) Erfinder: Gärtner, Franz, 97656 Oberelsbach (DE)
(74) Vertreter: Patentanwälte Dr. Solf & Zapf

(57) **Zusammenfassung**

Hängefördervorrichtung, insbesondere für auf Haken hängendem Gut, aufweisend eine Förderkette (4), die in einer Kettenführung (3) geführt wird, wobei die Kette (4) Kettenbolzen (5) aufweist, die an einer Seite der Kette (4) über die Kettenflansche (13) seitlich hinausstehen, wobei plattenförmige Tragelemente (19) vorhanden sind, welche mit Löchern (20) auf die Bolzen (5) aufgeschoben angeordnet sind, wobei die Tragelemente (19) plattenförmig ausgebildet sind und aufeinanderfolgend an der Kette angeordnet sind, wobei die Tragelemente (19) zumindest eine Öffnung (30) bzw. eine Freisparung (30) zur Aufnahme eines Hakens für das Gut aufweisen.

## Beschreibung

Die Erfindung betrifft eine Hängefördervorrichtung, insbesondere für auf Haken hängendem Gut.

Aus der DE 40 26 546 A1 ist eine Fördervorrichtung für auf Haken hängendem Gut, insbesondere Kleidungsstücke bekannt, bei dem die Kleidungsstücke entlang einer Schiene gefördert werden, auf denen die Haken ruhen. Die Haken werden hierbei mit einem Kettenförderer gefördert, wobei der Kettenförderer mit Förderfingern in die Laufbahn der Haken eingreift und diese mit den Fingern schiebt. Bei einer solchen Vorrichtung ist von Nachteil, daß diese einen hohen Platzbedarf hat und zudem von der Herstellung her sehr aufwendig und teuer ist.

Es ist ferner bekannt, insbesondere Kleidungsstücke hängend an sog. Trolleys zu transportieren, wobei diese Trolleys entlang einer Schiene verschoben werden, an der sie mit Rollen hängend gehalten werden.

Aufgabe der Erfindung ist es, eine Hängefördervorrichtung zu schaffen, welche einfach aufgebaut ist, leicht zu montieren und zu warten ist und welche problemlos auch über relativ enge Radien fördert, wobei das Fördergut einen geringen Abstand zueinander aufweisen kann und trotzdem individualisiert gefördert wird.

Die Aufgabe wird mit einer Hängefördervorrichtung mit den Merkmalen des Anspruchs 1 gelöst.

Erfindungsgemäß werden an einer Transportkette, welche in einem entsprechenden Transportprofil geführt wird, zumindest ein Teil der Kettenbolzen derart ausgebildet, daß sie seitlich über die Kette vorstehen, wobei die vorstehenden Enden in einem Teil des Profils geführt werden. Zwischen der eigentlichen Kette und dem Führungsteil für die Enden der überstehenden Kettenbolzen sind plattenartige Förderelemente auf die Kettenbolzen aufgeschoben und erstrecken sich durch einen Schlitz aus der Förderschiene heraus. Die Förderelemente sind dabei jeweils zueinander beweglich, so daß die Bewegungen der Kette, auch wenn sie um enge Radien geführt wird, gut mitgemacht werden können.

Bei einer solchen Fördervorrichtung ist von Vorteil, daß diese zuverlässig fördert, wobei die Vorrichtung einfach aufgebaut ist und eine relativ enge individualisierte Förderung von Kleidungsstücken zuläßt, wobei insbesondere die plattenförmigen Elemente mit Korrigierungseinrichtungen versehen sein können, so daß die mit engem Abstand individualisiert geförderten Güter entsprechend der Kodierung auch für eine Auswahl oder Selektion entsprechend individualisierbar sind.

Eine derartige Vorrichtung ist insbesondere besonders gut für Garderoben von Theatern, Warenhäusern oder dergleichen geeignet, wo auf engstem Raum auch mit engen Radien zuverlässig und schnell sortiert und gefördert werden muß.

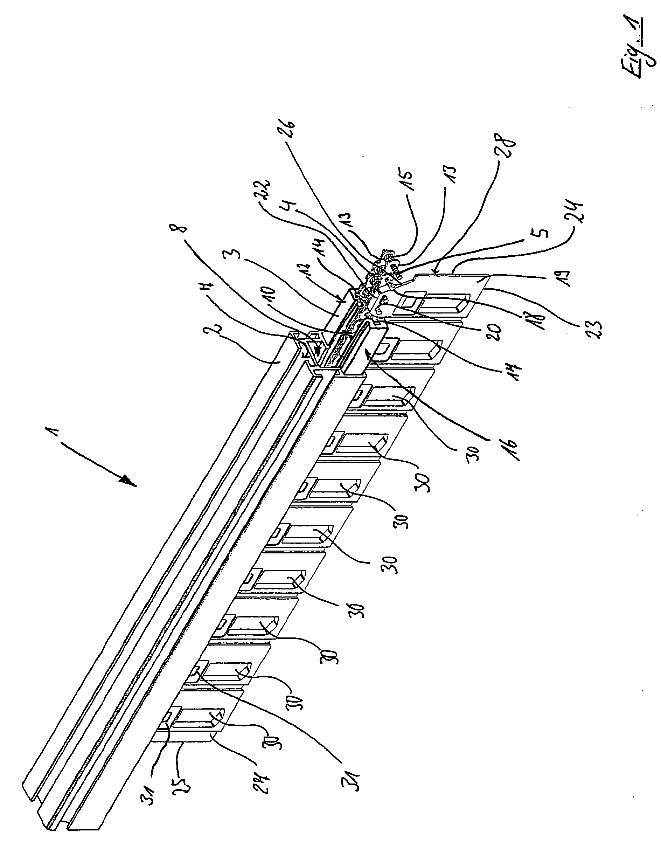

Die Erfindung wird anhand einer Zeichnung beispielhaft erläutert. Es zeigen dabei
- Fig. 1: eine erfindungsgemäße Hängefördervorrichtung in einer teilgeschnittenen perspektivischen Ansicht,

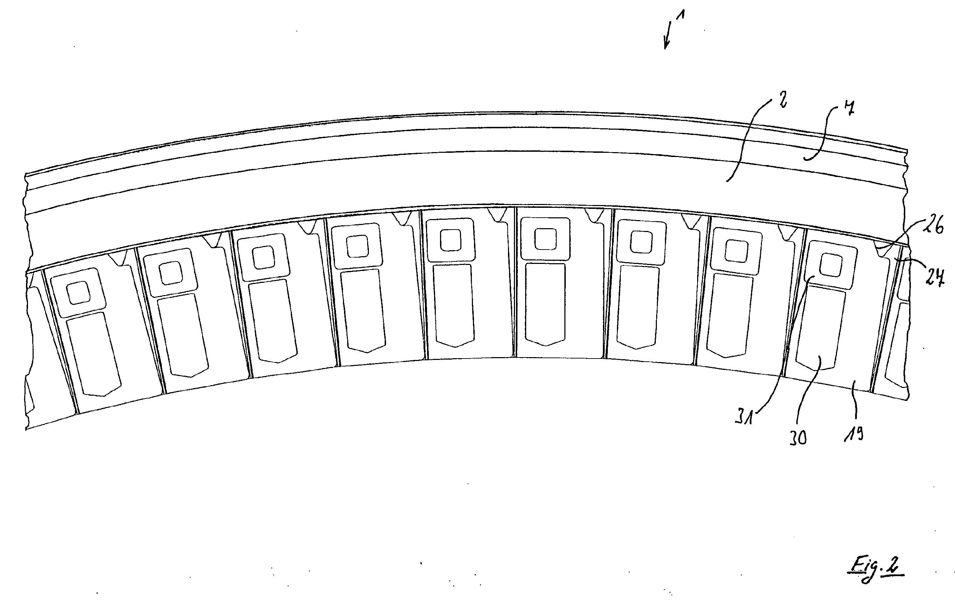

- Fig. 2: eine Hängefördervorrichtung nach Fig. 1 im Bereich einer abwärts gerichteten Kurvenförderung,

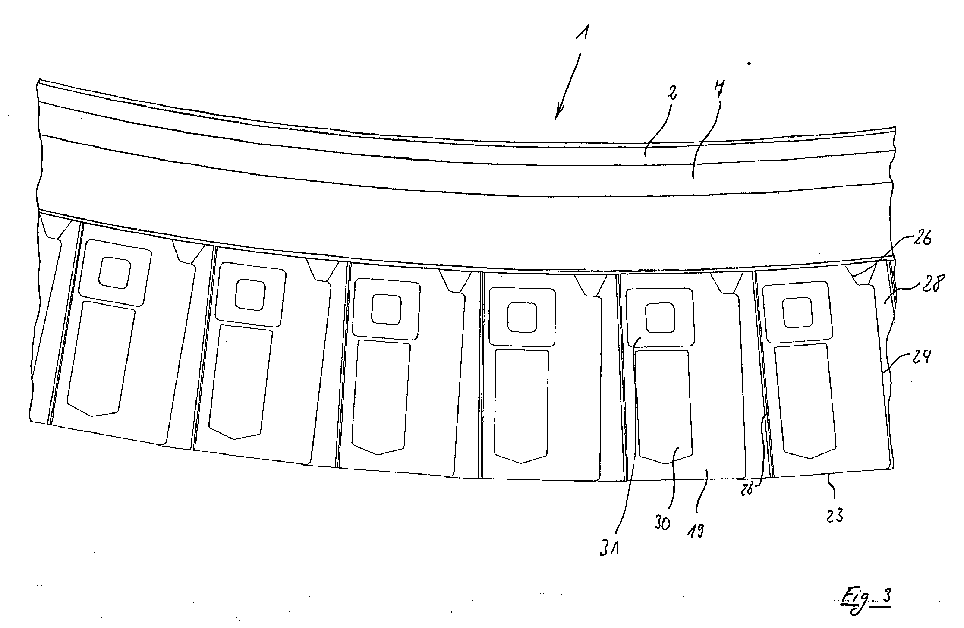

- Fig. 3: eine Hängefördervorrichtung nach Fig. 1 in einer aufwärts gerichteten Förderbewegung,
- Fig. 4: eine weitere Ausführungsform der erfindungsgemäßen Fördervorrichtung in einer teilgeschnittenen perspektivischen Ansicht,
- Fig. 5: die Fördervorrichtung nach Fig. 4 in einer Aufwärtsförderung,
- Fig. 6: die Hängefördervorrichtung nach Fig. 4 in einer Abwärtsförderung.

Eine erfindungsgemäße Hängefördervorrichtung 1 besitzt eine Förderschiene 2, eine in der Förderschiene 2 angeordnete Kettenführung 3 sowie eine Förderkette 4.

Die Förderschiene 2 ist als langgestrecktes Kunststoff- oder Metallhohlprofil ausgebildet, wobei die Förderschiene 2 außenseitig mit Nuten 7 zur Befestigung derselben an Tragkonstruktionen ausgebildet ist.

Die als Hohlprofil ausgebildete Förderschiene 2 weist im Innern einen Hohlraum 8 auf, der im Querschnitt beispielsweise flach rechteckig ausgebildet ist. Bezogen auf die Förderrichtung bzw. Förderung weist die Förderschiene 2 einen axialen Schlitz 9 auf.

In dem Hohlraum 8 ist die Kettenführung 3 angeordnet. Die Kettenführung 3 ist ein langgestrecktes, im wesentlichen rechteckiges Kunststoff- oder Metallhohlprofil, vorzugsweise Kunststoffhohlprofil, welches eine Außenkontur aufweist, die der Innenkontur der Schiene 2 entspricht. Die Kettenführung 3 ist somit im wesentlichen formschlüssig in der Förderschiene 2 angeordnet. Die Kettenführung 3 besitzt fluchtend mit dem Schlitz 9 einen Schlitz 10, der sich durch die Kettenführung 3 hindurch erstrecken kann und die Kettenführung 3 in zwei Profilhälften 12, 16 unterteilt.

Auf einer Profilhälfte 12 der Kettenführung 3 besitzt die Kettenführung 3 eine Innen- bzw. Hohlkontur, die der zu führenden Kette 4 entspricht, wobei für die bezogen auf den Schlitz 10 abgewandten Kettenflansche 13 der Kette 4 ein vertikaler Schlitz oder Nut 14 vorgesehen ist und zwischen dem Schlitz 14 und dem Schlitz 10 ein horizontaler Schlitz vorgesehen ist, der oberund unterseitig Stege (nicht erkennbar) aufweist, auf denen die Kettenwalzen 15 abrollen können. Auf der dem die Kette 4 führenden Profil diametral gegenüberliegenden Seite 16 ist ein horizontaler Schlitz bzw. eine horizontale Nut 17 eingebracht, in der die freien Enden 18 der Kettenbolzen 5 geführt werden.

Zwischen der Profilhälfte 16 und den ihr zugewandten Kettenflanschen 13 ist ein Freiraum vorhanden, wobei plattenförmige Tragelemente 19 mit Löchern 20 - die dem Bolzenabstand der Bolzen 5 entsprechen - auf die Bolzen aufgeschoben angeordnet sind.

Die Tragelemente 19 sind als im wesentlichen flach rechteckige Platten ausgebildet.

Die Tragelemente 18 besitzen somit zwei gegenüberliegende schmale Kanten 22, 23 sowie zwei diese verbindende gegenüberliegende Längskanten 24, 25. Eine schmale Kante 22 erstreckt sich zu einer Längskante 24 mit einer Schräge 26 derart, daß die Kante 22 in etwa halb so breit ist wie die Kante 23. Im Bereich der Kante 22 sind die zwei Löcher 20 angeordnet, welche einen Abstand aufweisen, der dem Bolzenabstand der Kette entspricht.

Im Bereich der Längskanten 24, 25 weisen die Transportelemente je eine Nut bzw. Ausnehmung 27, 28 auf, durch die die plattenförmigen Elemente in ihrem Querschnitt in etwa um die Hälfte verjüngt werden, wobei die Ausnehmungen 27, 28 in gegenüberliegende Flachseiten eingebracht sind. Im montierten Zustand hängen die plattenförmigen Tragelemente 19 derart an den Kettenbolzen, daß die Tragelemente 19 im Bereich der Nuten 27, 28 ineinandergreifend bzw. überlappend angeordnet sind. Die plattenförmigen Tragelemente 19 weisen benachbart zu einer Stirnkante 23 zur Stirnwandung 22 hin, in etwa über die Hälfte ihrer Erstreckung je eine im wesentlichen rechteckförmige Transportöffnung 30 auf.

Zwischen den Öffnungen 30 und der Stirnkante 22 ist je ein Kodierungsfeld 31 vorgesehen. Die Kodierungsfelder 31 können Kodierungsmittel (nicht gezeigt) aufweisen. Die Kodierungsmittel können im einfachsten Fall aufgeklebte Zahlen sein. Ferner können die Kodierungsmittel aus einem Bar-Code bestehen oder einen derartigen aufweisen, ferner können die Kodierungsmittel einen berührungslos oder abtastbar auslesbaren elektronischen Baustein oder dergleichen aufweisen. Die Hängefördervorrichtung weist hierfür eine entsprechende Ausleseeinrichtung und/oder Kodierungseinrichtung auf.

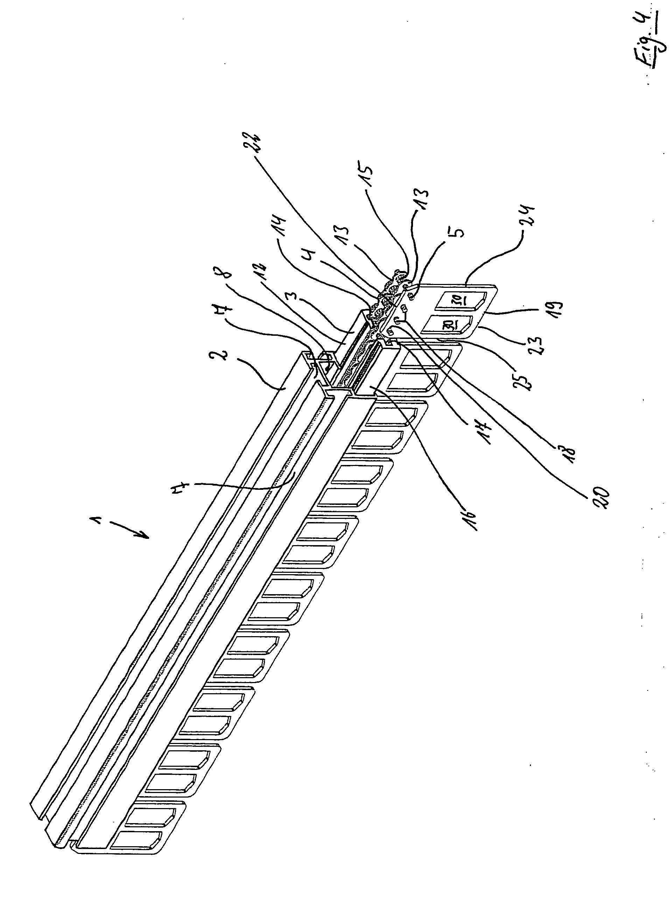

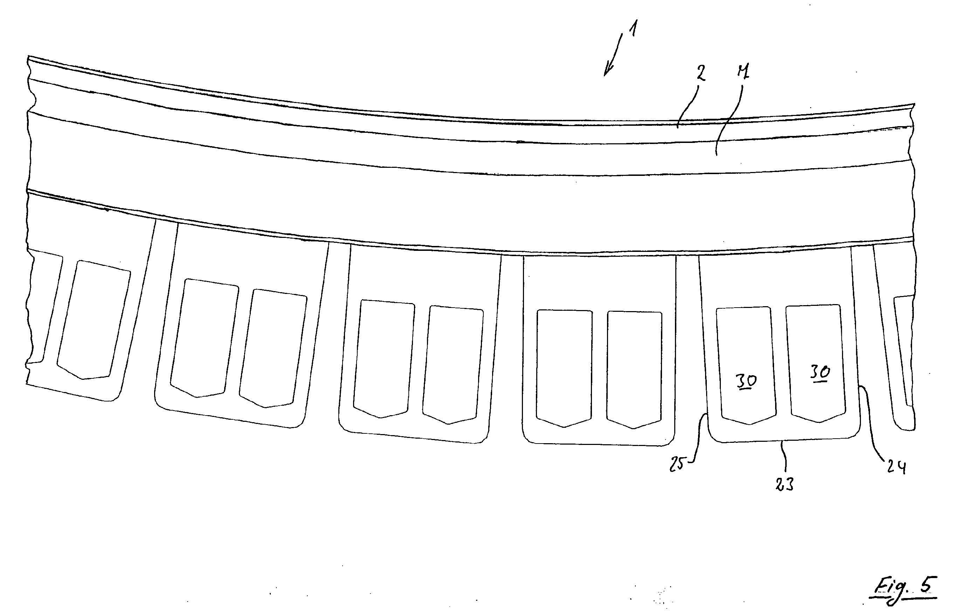

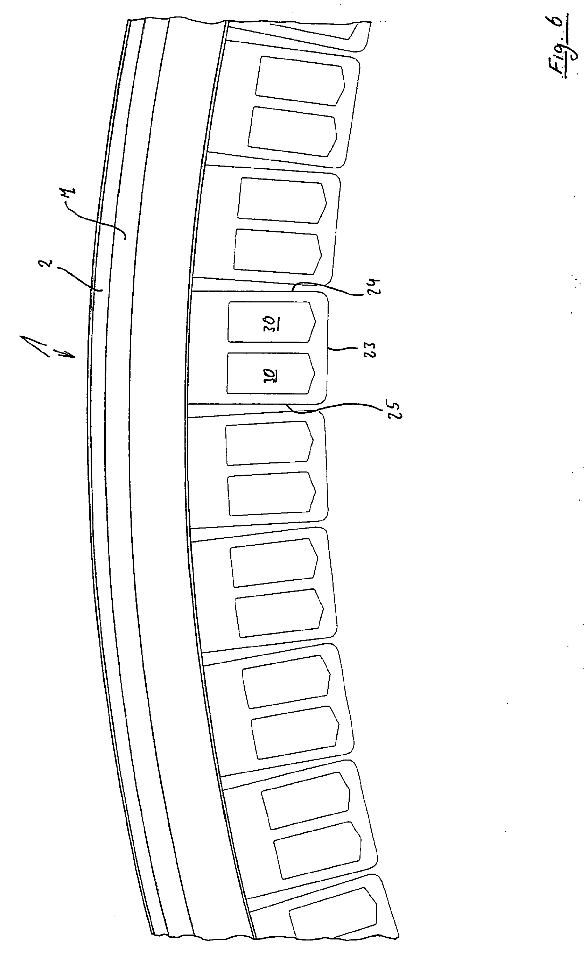

Bei einer weiteren Ausführungsform der Erfindung (Fig. 4 bis 6) sind die plattenförmigen Tragelemente 19 ebenfalls flach rechteckförmig plattenartig ausgebildet, wobei die plattenförmigen Tragelemente 19 hierbei keine Nuten aufweisen und die Stirnkante 22 in etwa die Breite aufweist, wie die Stirnkante 23. Bei dieser Ausführungsform sind im Bereich der Stirnkante 22 vier Bohrungen 20 für Kettenbolzen 5 vorgesehen, wobei die plattenförmigen Elemente 19 an den Kettenbolzen aufeinanderfolgend um je einen Kettenbolzenabstand voneinander beabstandet und nicht ineinandergreifend angeordnet sind. Diese Elemente 19 weisen zwei aufeinander folgende und demzufolge nebeneinander liegende Öffnungen 30 auf.

Auch derartige plattenförmige Elemente 19 können die entsprechenden Kodiereinrichtungen aufweisen.

## Patentansprüche

1. Hängefördervorrichtung, insbesondere für auf Haken hängendem Gut, aufweisend eine Förderkette (4), die in einer Kettenführung (3) geführt wird, wobei die Kette (4) Kettenbolzen (5) aufweist, die an einer Seite der Kette (4) über die Kettenflansche (13) seitlich hinausstehen, wobei plattenförmige Tragelemente (19) vorhanden sind, welche mit Löchern (20) auf die Bolzen (5) aufgeschoben angeordnet sind, wobei die Tragelemente (19) plattenförmig ausgebildet sind und aufeinanderfolgend an der Kette angeordnet sind, wobei die Tragelemente (19) zumindest eine Öffnung (30) bzw. eine Freisparung (30) zur Aufnahme eines Hakens für das Gut aufweisen.

2. Vorrichtung nach Anspruch 1,
**dadurch gekennzeichnet,**
**daß** die Kettenführung (3) in einer Förderschiene (2) angeordnet ist, wobei die Förderschiene (2) als langgestrecktes Kunststoff- oder Metallhohlprofil ausgebildet ist und die Förderschiene (2) außenseitig Nuten (7) zur Befestigung derselben an Tragkonstruktionen aufweist.

3. Vorrichtung nach einem der vorhergehenden Ansprüche,
**dadurch gekennzeichnet,**
**daß** die als Hohlprofil ausgebildete Förderschiene (2) im Innern einen Hohlraum (8) aufweist, wobei bezogen auf die Förderrichtung bzw. Förderung die Förderschiene (2) einen axialen Schlitz (9) aufweist.

4. Vorrichtung nach einem der vorhergehenden Ansprüche,
**dadurch gekennzeichnet,**
**daß** in dem Hohlraum (8) die Kettenführung (3) angeordnet ist, wobei die Kettenführung (3) ein langgestrecktes, im wesentlichen rechteckiges Kunststoff- oder Metallhohlprofil, vorzugsweise Kunststoffhohlprofil ist, welches eine Außenkontur aufweist, die in die Innenkontur der Schiene (2) kraftschlüssig einfügbar ist, wobei die Kettenführung (3) fluchtend mit dem Schlitz (9) einen Schlitz (10) aufweist, der sich durch die Kettenführung (3) hinein oder hindurch erstreckt und die Kettenführung (3) in zwei Profilhälften (12, 16) unterteilt.

5. Vorrichtung nach einem der vorhergehenden Ansprüche,
**dadurch gekennzeichnet,**
**daß** die Kettenführung (3) auf einer Profilhälfte (12) eine Innen- bzw. Hohlkontur aufweist, die der zu führenden Kette (4) im wesentlichen entspricht, wobei für die bezogen auf den Schlitz (10) abgewandten Kettenflansche (13) der Kette (4) ein vertikaler Schlitz oder Nut (14) vorgesehen ist und zwischen dem Schlitz (14) für die Kettenflansche (13) und dem Schlitz (10) in der Kettenführung (3) ein horizontaler Schlitz vorgesehen ist, der ober- und unterseitig Stege aufweist, auf denen die Kettenwalzen (15) abrollen können.

6. Vorrichtung nach einem der vorhergehenden Ansprüche,
**dadurch gekennzeichnet,**
**daß** auf der dem die Kette (4) führenden Profil diametral gegenüberliegenden Seite (16) ein horizontaler Schlitz bzw. eine horizontale Nut (17) eingebracht ist, in der die freien Enden (18) der Kettenbolzen (5) geführt werden.

7. Vorrichtung nach einem der vorhergehenden Ansprüche,
**dadurch gekennzeichnet,**
**daß** zwischen der einen Profilhälfte (16) und den ihr zugewandten Kettenflanschen (13) ein Freiraum vorhanden ist, wobei die Tragelemente (19) auf die Bolzen aufgeschoben in dem Freiraum angeordnet sind.

8. Vorrichtung nach einem der vorhergehenden Ansprüche,
**dadurch gekennzeichnet,**
**daß** die Tragelemente (18) zwei gegenüberliegende schmale Kanten (22, 23) sowie zwei diese verbindende gegenüberliegende Längskanten (24, 25) aufweisen, wobei im Bereich der Kante (22) Löcher (20) zum Aufschieben des Tragelements (18) auf überstehende Kettenbolzen (5) vorhanden sind, wobei die Tragelemente (18) benachbart zu einer Stirnkante (23) zur Stirnwandung (22) hin in etwa über die Hälfte ihrer Erstreckung zumindest eine im wesentlichen rechteckförmige Transportöffnung (30) aufweisen.

9. Vorrichtung nach einem der vorhergehenden Ansprüche,
**dadurch gekennzeichnet,**
**daß** zwischen den Öffnungen (30) und der Stirnkante (22) je ein Kodierungsfeld (31) vorgesehen ist, wobei das Kodierungsfeld Kodierungsmittel aufweist, wobei die Kodierungsmittel aufgeklebte Zahlen, ein Bar-Code oder dergleichen und/oder Kodierungsmittel in Form von berührungslos oder abtastbar auslesbaren elektronischen Bausteinen aufweisen.

10. Vorrichtung nach einem der vorhergehenden Ansprüche,
**dadurch gekennzeichnet,**
**daß** sich eine schmale Kante (22) zu einer Längskante (24) mit einer Schräge (26) derart erstreckt, daß die Kante (22) in etwa halb so breit ist wie die Kante (23), wobei im Bereich der Kante (22) zwei Löcher (20) angeordnet sind, welche einen Abstand aufweisen, der dem Bolzenabstand der Kette entspricht und im Bereich der Längskanten (24, 25) die Transportelemente je eine Nut bzw. Ausnehmung (27, 28) aufweisen, durch die die plattenförmigen Elemente in ihrem Querschnitt in etwa um die Hälfte verjüngt ausgebildet sind, wobei die Ausnehmungen (27, 28) in gegenüberliegende Flachseiten der Tragelemente (18) eingebracht sind.

11. Vorrichtung nach einem der vorhergehenden Ansprüche,
**dadurch gekennzeichnet,**
**daß** im montierten Zustand die plattenförmigen Tragelemente (19) derart an den Kettenbolzen (5) hängen, daß die Tragelemente (19) im Bereich der Nuten (27, 28) ineinandergreifend bzw. überlappend aufeinanderfolgend angeordnet sind.

12. Vorrichtung nach einem der Ansprüche 1 bis 10,
**dadurch gekennzeichnet,**
**daß** die plattenförmigen Tragelemente (19) rechteckförmig plattenartig ausgebildet sind, wobei die plattenförmigen Tragelemente (19) im Bereich der Stirnkante (22) vier Bohrungen (20) für Kettenbolzen (5) aufweisen, wobei die plattenförmigen Elemente (19) an den Kettenbolzen (5) aufeinanderfolgend um je einen Kettenbolzenabstand voneinander beabstandet angeordnet sind und die Elemente (19) zwei aufeinander folgende und demzufolge nebeneinander liegende Öffnungen (30) aufweisen.
